# EUROPÄISCHE PATENTSCHRIFT

(11) **EP 2 159 104 B1**
(45) Veröffentlichungstag und Bekanntmachung des Hinweises auf die Patenterteilung: **07.03.2012**
(21) Anmeldenummer: 08165614.2
(22) Anmeldetag: 01.10.2008
(51) Int. Cl.: B60R 3/02

(54) **Trittplattenausfahrvorrichtung**
Step plate extension device
Dispositif d'extraction de marchepieds

(30) Priorität: 05.10.2007 DE 202007013960 U
(43) Veröffentlichungstag der Anmeldung: 03.03.2010
(73) Patentinhaber: Gebr. Bode GmbH & Co. KG, 34123 Kassel (DE)
(72) Erfinder: Böde, Ralf, 34590, Wabern (DE); Grimm, Holger, 36280, Oberaula (DE)
(74) Vertreter: Bauer Vorberg Kayser Patentanwälte

(56) Entgegenhaltungen:
- WO-A-98/06370
- DE-U1-202005 012 584
- DE-U1-202007 000 912
- US-B1- 6 167 816

## Beschreibung

Die vorliegende Erfindung betrifft eine Trittplattenausfahrvorrlchtung für eine ausfahrbare Trittplatte eines Türeinstiegs eines Personenbeförderungsfahrzeuges, wobei die Trittplatte aus einer Ruhestellung in eine Gebrauchsstellung und zurück verfahrbar Ist.

Derartige Zustiegs- und Zufahrtshilfen werden bei Fahrzeugen zur Personenbeförderung, beispielsweise bei Bussen oder Schienenfahrzeugen des öffentlichen Nahverkehrs eingesetzt. Sie sind in vielfältiger Form bekannt und erleichtern den Ein- und Ausstieg dadurch, dass im Bereich von Haltestellen an den Fahrzeugen verschlebbar und meist auch verschwenkbar gelagerte Trittplatten ausgefahren werden. Trittplatten werden dabei zur Überbrückung von Spalten (beispielsweise bei Bahnsteigen) oder auch zum Höhenausgleich eingesetzt. Schließlich erleichtern oder ermöglichen sie Rollstuhlfahrern den Zugang In die Fahrzeuge. Nach Beendigung der Aus- und Einstiegsphase und eventuell nach dem Schließen der Fahrzeugtüren wird die Trittplatte wieder in ihre Ruhestellung zurückgebracht.

Die Trittplatten bestehen in der Regel aus einem widerstandsfähigen und starren, aber leichten Material und sind in der Regel mit einer rutschhemmenden Auflage versehen.

Neben motorisch ausfahrbaren Trittplatten sind ebenfalls manuell ein./ausziehbare sowie klappbare Trittplatten bekannt. Im Bereich der Trittplatte ist bei fremdbetriebenen Zustiegshilfen ein Motor vorgesehen, der die Trittplatte aus ihrer Ruhestellung In die Gebrauchsstellung heraus- und wieder zurückfährt. Derartige motorisch betriebene Trlt-tplatten sind beispielsweise In den Druckschriften DE 20 2007 000 912 U1, DE 20 2005 012 584 U1 und DE 20 2006 017 716 U1 beschreiben. Wie auch diesen Druckschriften zu entnehmen ist, ist die begehbare Trittplatte seitlich an Führungsmitteln befestigt, über die sie linear ein- und ausgefahren werden kann. In der ausgefahrenen Endstellung ist meist ein Absenken der Trittplatte notwendig. Zu diesem Zweck ist am hinteren Ende der Trittplatte eine Quertraverse vorgesehen, die ebenfalls mit den Führungsmitteln in Verbindung steht. Die Trittplatte und die Quertraverse sind wiederum mit Hilfe eines Gelenkbandes, einem Scharnier, einem Kunststoffband oder ähnlichem miteinander verbunden. Diese "gelenkige" Verbindung zwischen der Quertraverse und der Trittplatte erlaubt das Absenken der Trittplatte auf den Untergrund, beispielsweise einen Bahnsteig, Bordstein oder auch die Fahrbahnoberfläche.

Nachteilig bei bekannten Trittplattenausfahrvorrichtungen dieser Art ist, dass die für das Absenken der Trittplatte notwendigen Zwischenmittel zum einen Bauraum benötigen, zum anderen aber bei Gebrauch verschmutzen oder beschädigt werden können. Oftmals befinden sich die Führungsmittel und auch der Motor zum Antrieb der Trittplatte Innerhalb eines Rahmens, der als eigenständige und komplette Einheit In einen entsprechenden Bauraum am Fahrzeug eingesetzt wird. Da der Einbauraum für derartige Trittplatten In der Regel begrenzt ist, führt der durch die Zwischenmittel benötigte Bauraum auch dazu, dass die begehbare Trittplatte selbst nur geringere Abmessungen aufweisen kann.

Eine kompakte, flache Trittplattenausfahrvorrichtung, welche eine im Verhältnis zum benötigten Bauraum große Trittplatte aufweist, ist In der gattungsbildenden WO 98/06370 A beschrieben. Der Antrieb dieser Trittplattenausfahrvorrichtung ist In einer vorteilhaften Gestaltung als Spindelantrieb ausgelegt. Die Führung des Trittbretts wird über zwei entlang der Einfahr-/Ausfahrrlchtung des Trittbretts gelagerte eckige Schlitten realisiert. Diese sind als Präzislonslager gestaltet, welche keine Schmierung benötigen und durch Ihre Einfachheit und ihren gezwungenen, ausschließlichen Longitudinal-Gleitkontakt frei von Vibrationseffekten sind.

Der Antrieb der Trittplatte kann verschieden ausgeführt sein, z.B. durch seitliche Spindeln, welche neben dem Antrieb ebenfalls die Funktion der Führung übernehmen, oder auch durch einen zentralen Antrieb, welcher zusätzliche (z.B. seitliche) Führungsmittel erfordert. Weitere Antrlebsmöglichkelten sind ebenfalls realisiert, auf diese wird jedoch Im Rahmen dieser Patentanmeldung nicht eingegangen.

Die Aufgabe der vorliegenden Erfindung besteht darin, eine Trittplattenausfahrvorrichtung zu schaffen, die kompakt und Platz sparend aufgebaut Ist. Sie soll ein motorisches Ausfahren der Trittplatte und auch ein Absenken oder Hochschwenken der Trittplatte in der Ausfahrposition ermöglichen. Ferner sollen eine einfache Montage gewährleistet und Versatze der Führungsmittel, welche beispielsweise im Laufe der Nutzung entstehen können, ausgeglichen werden. Weiterhin sollen die weiteren o.g. Nachteile des Standes der Technik vermieden werden.

Erfindungsgemäß wird die Aufgabe durch eine in Hauptanspruch 1 beschriebene Trittplattenausfahrvorrichtung gelöst.

Vorteilhafte Ausgestaltungen der Erfindung sind in den Unteransprüchen beschrieben.

Die erfindungsgemäße Trittplattenausfahrvorrichtung besteht also aus einer Trittplatte, zwei daran gelenkig angeordneten Führungselementen, die mit in Ein-/Ausfahrrichtung seitlich der Trittplatte verlaufenden Führungsmitteln verbunden sind. Die Führungsmittel selbst können wiederum in einer Art Rahmen angeordnet sein, der neben zwei Seitenteilen auch ein quer verlaufendes Rückteil aufweist. Über den Rahmen wird die gesamte Trittplattenausfahrvorrichtung am Fahrzeug befestigt.

Erfindungsgemäß ist also die Trittplatte über seitlich angeordnete Führungselemente unmittelbar schwenkbar an den seitlich verlaufenden Führungsmitteln befestigt. Auf die nachteiligen Zwischenmittel, die somit zwischen der Trittplatte und der sonst üblichen Quertraverse angeordnet sind, kann vollständig verzichtet werden. Entsprechend baut die gesamte Trittplattenausfahrvorrichtung in Ein-/Ausfahrrichtung kürzer, es werden weniger Bauteile benötigt und auch die Montage und Demontage ist einfacher durchzuführen. Insbesondere kann auch auf die sonst notwendige Quertraverse verzichtet werden, was eine weitere erhebliche Gewichtsreduzierung bedeutet.

Der Antrieb der Trittplatte erfolgt vorzugsweise über einen Elektromotor, der ebenfalls am Rahmen befestigt sein kann. In einer besonders bevorzugten Ausführungsvariante sind die Führungsmittel als Spindelmuttern ausgeführt, die sich jeweils durch eine Öffnung in einem der Führungselemente erstrecken. Die Öffnungen weisen zu diesem Zweck ein Innengewinde auf, so dass eine Drehung der Spindelmutter zu einem Verfahren der Führungselemente und damit der Trittplatte führt. Alternativ kann auch eine zusätzliche Antriebswelle vorgesehen sein, die die Trittplatte antreibt; die Führungsmittel übertragen dann keine Kraft.

Die Führungselemente sind einander gegenüberliegend angeordnet und weisen einen Grundkörper mit der durchgehenden Öffnung für die Führungsmittel und einen Zapfenabschnitt, auf der sich im eingebauten Zustand der Trittplattenausfahrvorrichtung in jeweils eine Aufnahmeöffnung der Trittplatte hinein erstreckt. Der Zapfenabschnitt weist einen kreisförmigen Querschnitt auf, so dass die Trittplatte um die Zapfenabschnitte schwenkbar ist. In der vollständig ausgefahrenen Position liegt die Trittplatte nicht mehr auf dem Rahmen auf und kann sich aufgrund der Schwenkbarkeit um die Zapfenabschnitte nach unten absenken oder kann nach oben geschwenkt werden.

Dadurch, dass die Führungselemente auch um die Führungsmittel schwenkbar sind, ist die Trittplatte in gewissem Rahmen bewegbar. Dies hat den großen Vorteil, dass ein Versatz der Führungsmittel, der auch im Laufe der Nutzung entstehen kann, ausgeglichen wird, die Trittplatte verkantet sich beim Ein- und Ausfahren nicht. Auch können die Bauteiltoleranzen für die Erstmontage höher ausfallen, was Kosten und Aufwand einspart.

Schließlich hat es sich als besonders vorteilhaft erwiesen, wenn die Aufnahmeöffnungen der Trittplatte als Sacklöcher ausgebildet, die derart tief sind, dass sie die Zapfenabschnitte über ihre gesamte Länge aufnehmen können. Die Zapfenabschnitte können in den Aufnahmeöffnungen ein gewisses Spiel in ihrer Längsrichtung haben, was die Freiheitsgrade und die Bewegbarkeit der Trittplattenausfahrvorrichtung weiter erhöht. Weiterhin sind die Zapfenabschnitte entlang der in Längsachse der Zapfenabschnitte verlaufenden Achse Y-Y verschiebbar, wodurch eine Abweichung der Parallelität der Führungsmittel ausgeglichen werden kann. Laufen die Führungsmittel also nicht exakt parallel zueinander, sondern öffnen sie sich beispielsweise in Ausfahrrichtung, kann dies durch ein Verschieben der Zapfenabschnitte in den Aufnahmeöffnungen ausgeglichen werden.

Erfindungsgemäß können auch Hülsen vorgesehen sein, die in die Aufnahmeöffnungen einführbar sind und in die sich die Zapfenabschnitte erstrecken. Derartige Hülsen sind beispielsweise aus Kunststoff gefertigt und erleichtern die Bewegung des vorzugsweise aus Metall gefertigten Führungselementes in der Aufnahmeöffnung.

Die erfindungsgemäße Trittplattenausfahrvorrichtung spart nicht nur Raum ein, auch bleibt die gelenkige Lagerung stets vor äußeren Einflüssen geschützt. Im Gegensatz zu einem Gelenkband oder Scharnier sind die Führungselemente Schmutz und Feuchtigkeit weniger ausgesetzt, wodurch die gesamte Trittplattenausfahrvorrichtung eine lange Lebensdauer aufweist.

Die Trittplatte kann vorzugsweise in eine Hauptplatte und eine sich daran anschließendes Hinterkantenprofil aufgeteilt sein. Die Führungselemente bzw. die Zapfenabschnitte der Führungselemente erstrecken sich dann seitlich in das Hinterkantenprofil, das die entsprechenden Aufnahmeöffnungen aufweist. Diese Ausführung ist insbesondere hinsichtlich der Herstellung der Trittplatten vorteilhaft, da die Hauptplatte aus einem widerstandsfähigem Material schnell und einfach geschnitten oder gefertigt werden kann, während lediglich die Hinterkantenprofile mit entsprechender Genauigkeit gefertigt werden müssen.

Anstelle von Sacklöchern können die Aufnahmeöffnungen auch als eine durchgängige Bohrung ausgeführt sein, die sich durch die gesamte Trittplatte bzw. das gesamte Hinterkantenprofil hindurch erstreckt.

Denkbar ist natürlich auch eine kinematische Umkehr der Führungselemente, von der Trittplatte können Zapfenabschnitte vorstehen, die sich in Aufnahmeöffnungen hinein erstrecken, die in die Führungselemente eingebracht sind.

Die Aufnahmeöffnungen sind vorzugsweise am hinteren Ende der Trittplatte angeordnet, so dass beim Absenken der Trittplatte nur ein geringer Bereich übersteht. Alternativ ist aber je nach Anforderungsprofil auch eine Anordnung der Aufnahmeöffnungen an anderen Stellen möglich.

Anhand der nachfolgenden Figuren wird die Erfindung näher erläutert. Diese sind nur beispielhaft zu verstehen und sollen den Umfang der Erfindung nicht beschränken. Es zeigen:
- Figur 1:: Eine Trittplattenausfahrvorrichtung in perspektivischer Darstellung, mit ausgefahrener Trittplatte,
- Figur 2:: Die Trittplattenausfahrvorrichtung aus Figur 1 mit abgenommener Deckplatte von oben,
- Figur 3:: die Trittplattenausfahrvorrichtung aus Figur 1 in einer Explosionsansicht,
- Figur 4:: eine weitere Explosionsansicht der erfindungsgemäßen Trittplattenausfahrvorrichtung.
- Figur 5:: eine zweite Ausführung eines Führungselements mit einem zugehörigen Führungsmittel.

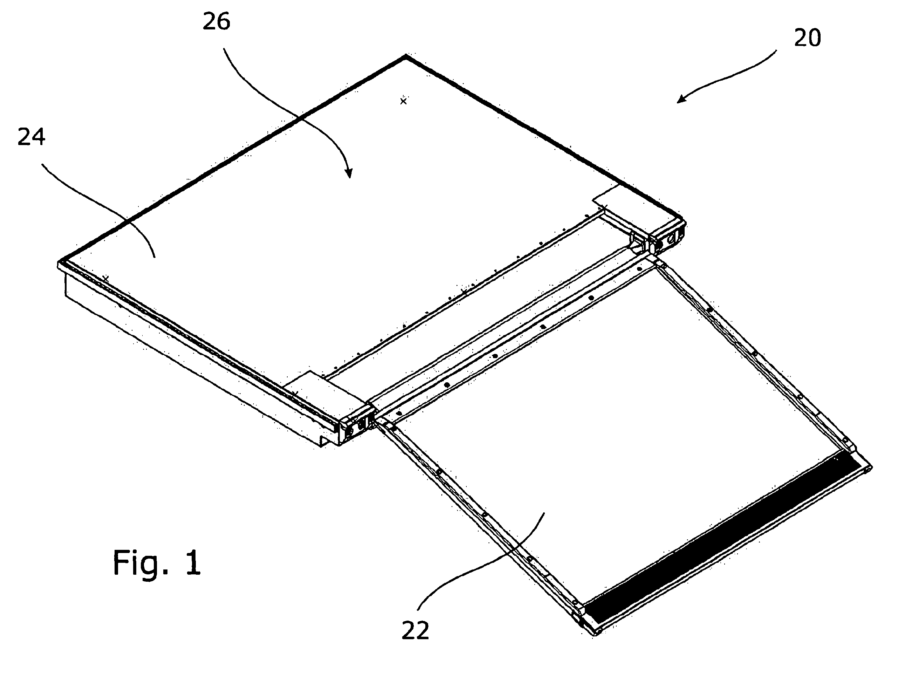

Figur 1 zeigt eine erfindungsgemäße Trittplattenausfahrvorrichtung 20 mit einer ausgefahrenen Trittplatte 22. Die Trittplattenausfahrvorrichtung 20 funktioniert prinzipiell nach Art einer Schublade, die Trittplatte 22 wird in ein Gehäuse 24 ein- oder aus diesem herausgefahren. Das Gehäuse 24 weist hierzu eine Öffnung auf, durch die die Trittplatte 22 ein- und ausfahrbar ist.

Die Trittplatte 22 ist schwenkbar gelagert, so dass sie im ausgefahrenen Zustand zumindest abgesenkt, vorteilhafterweise aber auch nach oben geschwenkt werden kann.

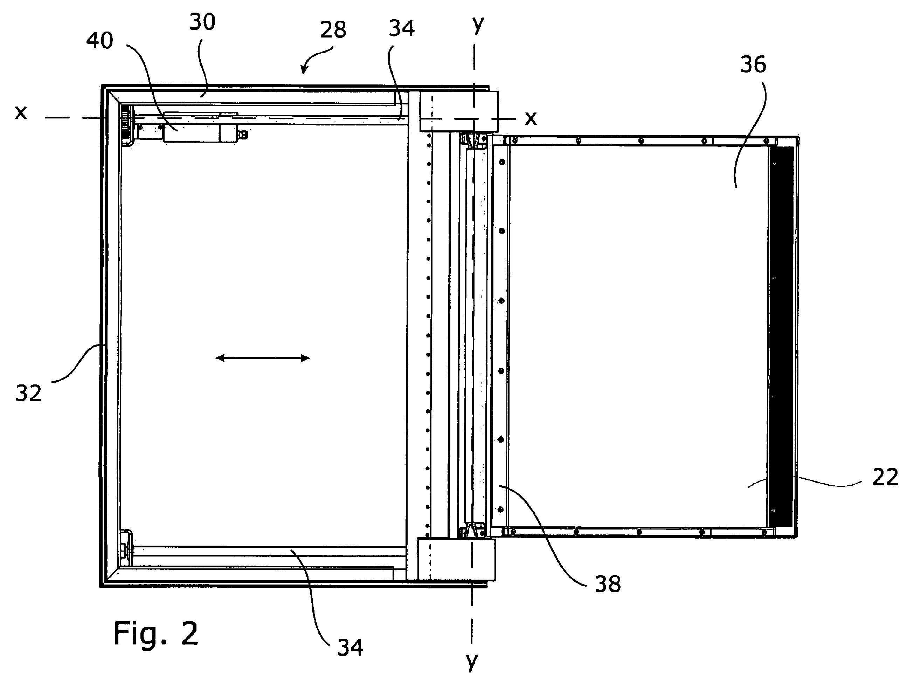

Figur 2 zeigt die Trittplattenausfahrvorrichtung 20 von oben mit abgenommener Deckplatte 26. Erkennbar ist, dass das Gehäuse 24 einen Rahmen 28, bestehend aus zwei Seitenteilen 30 und einem Rückteil 32 aufweist. An diesem Rahmen sind Führungsmittel 34 befestigt, die sich seitlich der Trittplatte 22 in Richtung der Ein-/Ausfahrrichtung (Pfeil) erstrecken. Die Führungsmittel 34 können als Spindelmuttern ausgeführt sein. Der Rahmen 28 kann als Verbundteil ausgebildet sein.

In der gezeigten Ausführungsvariante ist die Trittplatte 22 durch eine Hauptplatte 36 und ein sich daran anschließendes Hinterkantenprofil 38 gebildet. Das Hinterkantenprofil 38 ist mit der Hauptplatte 36 beispielsweise verschraubt oder vernietet, es kann aber auch geklebt sein. Alternativ zur zweiteiligen Ausführung kann die Trittplatte 22 auch einteilig ausgebildet sein, ein separates Hinterkantenprofil 38 ist dann nicht notwendig.

Ein Elektromotor 40 ist an einem Ende eines Führungsmittels 34 befestigt und treibt die Führungsmittel 34 an. Es können beide Führungsmittel 34 angetrieben sein, es kann aber auch ausreichen, lediglich ein Führungsmittel 34 anzutreiben, während das andere Führungsmittel 34 lediglich der Führung und nicht der Kraftübertragung dient. Denkbar ist auch eine Ausführungsvariante, bei der nicht die Führungsmittel 34 selbst angetrieben werden, sondern ein zusätzlicher zentraler Antrieb für die Bewegung der Trittplatte 22 vorgesehen ist.

Das Gehäuse 24 kann weiterhin eine vordere Auflagetraverse 42 aufweisen, auf der die Trittplatte 22 im eingefahrenen Zustand und auch während der Fahrbewegung aufliegt.

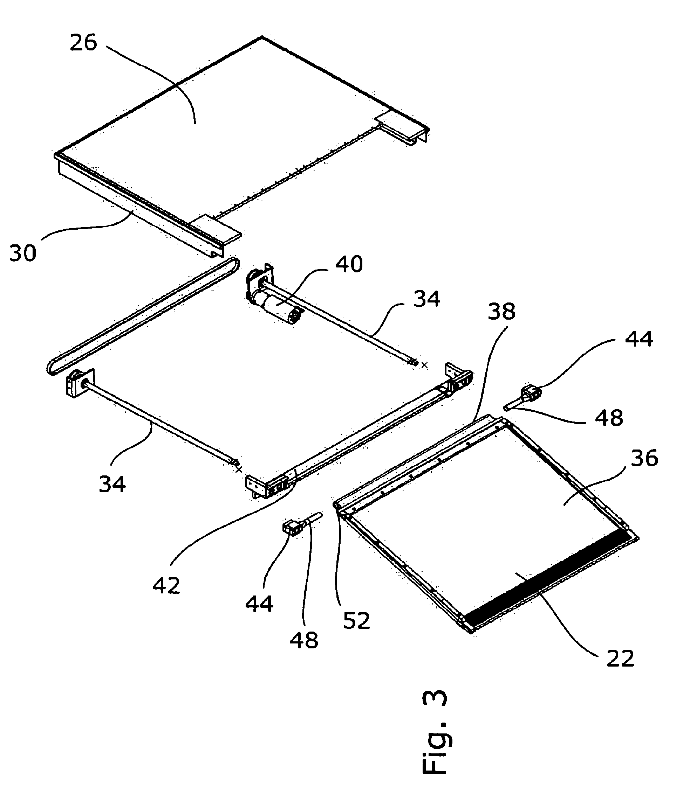

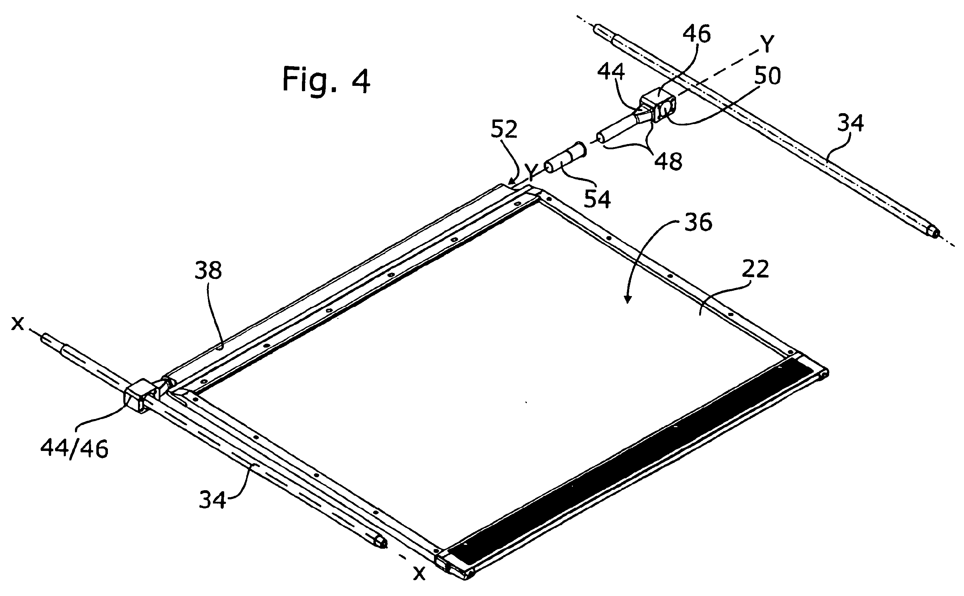

Insbesondere die Figuren 3 und 4 zeigen Führungselemente 44, die die schwenkbare Lagerung der Trittplatte 22 bewirken. Die Führungselemente 44 weisen einen Grundkörper 46 auf, der in einen Zapfenabschnitt 48 übergeht. Durch den Grundkörper 46 verläuft eine Öffnung 50, durch die sich im eingebauten Zustand jeweils ein Führungsmittel 34 erstreckt. Ist das Führungsmittel 34 als Spindelmutter ausgeführt, weist die Öffnung 50 ein entsprechendes Innengewinde auf.

Der Zapfenabschnitt 46 erstreckt sich im eingebauten Zustand der Trittplattenausfahrvorrichtung 20 seitlich in eine Aufnahmeöffnung 52 der Trittplatte 22 bzw. des Hinterkantenprofils 38 hinein. Somit ist die Trittplatte 22 um eine sich entlang der Längsachse des Zapfenabschnitts 48 erstreckende Achse Y-Y und sich entlang der Führungsmittel 34 erstreckende Achsen X-X schwenkbar.

Weiterhin zeigt Figur 4, dass eine Hülse 54 verwendbar ist, die in eine Aufnahmeöffnung 52 hineingesteckt werden kann, um selbst wiederum den Zapfenabschnitt 48 aufnehmen zu können.

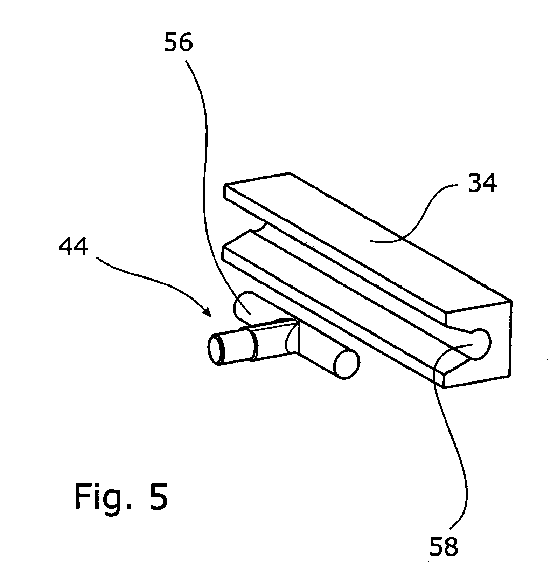

Figur 5 verdeutlicht, dass auch weitere denkbare Varianten des Führungselements 44 und einem zugehörigen Führungsmittel 34 gibt. Das Führungselement 44 weist einen länglichen, stabförmigen Körper 56 auf, der in einer Längsnut 58 des Führungsmittels 34 geführt ist.

Die erfindungsgemäße Trittplattenausfahrvorrichtung 20 ist durch ihre in nahezu alle Richtungen schwenkbare Lagerung sehr schnell und einfach zu montieren, die Ansprüche an die Fertigung der Bauteile hinsichtlich ihrer Abmessungen können deutlich niedriger als bei bekannten Trittplattenausfahrvorrichtungen 20 sein. Der vorhandene Bauraum wird besser ausgenutzt und die Gelenke sind gegenüber Umwelteinflüssen besser geschützt.

## Patentansprüche

1. Trittplattenausfahrvorrichtung (20) für eine ausfahrbare Trittplatte (22) eines Türeinstiegs eines Personenbeförderungsfahrzeuges, wobei die Trittplatte (22) aus einer Ruhestellung In eine Gebrauchsstellung und zurück verfahrbar ist,
- Führungsmittel (34) vorgesehen sind, die jeweils seitlich derTrittplatte (22) in Ein-/Ausfahrrichtung verlaufen und,
- die Trittplatte (22) über Führungselemente (44) mit den Führungsmitteln (34) derart verbunden ist, dass die Trittplatte (22) entlang einer Längsachse (Y-Y), die durch die Führungselemente (44) und quer zu den Führungsmittel (34) verläuft, schwenkbar ist,
**dadurch gekennzeichnet, dass** die Trittplatte (22) auch um Längsachsen (X-X), die in Längsrichtung der Führungsmittel (34) verlaufen, schwenkbar ist und dass die Führungselemente (44) jeweils einen Grundkörper (46) mit einer durchgehenden Öffnung (50), durch die sich jeweils ein Führungsmittel (34) erstreckt und einen sich an den Grundkörpern (46) anschließenden Zapfenabschnitt (48), der sich in eine Aufnahmeöffnung (52) der Trittplatte (22) hinein erstreckt, aufweist.

2. Trittplattenausfahrvorrichtung (20) nach Anspruch 1,
**dadurch gekennzeichnet, dass**
die Zapfenabschnitte (48) In den Aufnahmeöffnungen (52) In ihrer Längsrichtung verschiebbar sind.

3. Trittplattenausfahrvorrlchtung (20) nach einem der Ansprüche 1 und 2,
**dadurch gekennzeichnet, dass**
zumindest ein Führungsmittel (44) als Spindelmutter ausgeführt ist, die die Trittplatte (22) antreibt.

4. Trittplattenausfahrvorrichtung (20) nach einem der Ansprüche 1 und 2,
**dadurch gekennzeichnet, dass**
weiterhin eine Antriebswelle vorgesehen Ist, die die Trittplatte(22) antreibt.

5. Trittplattenausfahrvorrlchtung (20) nach einem der Ansprüche 1 bis 4,
**dadurch gekennzeichnet, dass**
die Trittplatte (22) durch eine Hauptplatte (36) und ein sich daran anschließendes Hinterkantenprofil (38) gebildet Ist, wobei das Hinterkantenprofll (38) die Aufnahmeöffnungen (52) aufweist.

6. Trittplattenausfahrvorrlchtung (20) nach einem der Ansprüche 1 bis 5,
**dadurch gekennzeichnet, dass**
das Gehäuse (24) weiterhin eine vordere Auflagetraverse (42) aufweist, auf der die Trittplatte (22) im eingefahrenen Zustand und auch während der Fahrbewegung aufliegt.

7. Trittplattenausfahrvorrlchtung (20) nach einem der Ansprüche 1 bis 6,
**dadurch gekennzeichnet, dass**
dass In den Aufnahmeöffnungen (52) Hülse (54) angeordnet sind, In die jeweils ein Zapfenabschnitt (48) einführbar ist.

## Claims

1. Stepping plate extension device (20) for an extendable stepping plate (22) of a door entrance of a passenger transport vehicle, the stepping plate (22) being movable from a rest position Into a use position and back,
- guiding means (34) being provided which respectively extend laterally of the stepping plate (22) in the extending/retracting direction, and
- the stepping plate (22) being connected via guiding elements (44) to the guiding means (34) in such a way that the stepping plate (22) is pivotable along a longitudinal axis (Y-Y) which extends through the guiding elements (44) and transversely to the guiding means (34),
**characterised in that** the stepping plate (22) is pivotable also about longitudinal axes (X-X) extending In the longitudinal direction of the guiding means (34), and that the guiding elements (44) each comprise a basic body (46) with a through-opening (50), through which one guiding means (34), respectively, extends, and a pin section (48) which is adjacent to the basic bodies (46) and extends into an accommodation opening (52) of the stepping plate (22).

2. Stepping plate extension device (20) according to claim 1, **characterised in that**
the pin sections (48) are displaceable In the accommodation openings (52) In their longitudinal direction.

3. Stepping plate extension device (20) according to any one of the claims 1 and 2, **characterised in that**
at least one guiding means (44) Is configured as a spindle nut which drives the stepping plate (22).

4. Stepping plate extension device (20) according to any one of the claims 1 and 2, **characterised in that**
furthermore, a drive shaft is provided which drives the stepping plate (22).

5. Stepping plate extension device (20) according to any one of the claims 1 to 4, **characterised in that**
the stepping plate (22) Is formed by a main plate (36) and a rear-edge profile (38) adjacent thereto, with the rear-edge profile (38) comprising the accommodation openings (52).

6. Stepping plate extension device (20) according to any one of the claims 1 to 5, **characterised in that**
the housing (24) furthermore comprises a front supporting cross beam (42) on which the stepping plate (22) rests in the retracted condition and also during the driving motion.

7. Stepping plate extension device (20) according to any one of the claims 1 to 6, **characterised in that**
sleeves (54) Into which one pin section (48), respectively, can be Inserted are disposed in the accommodation openings (52).

## Revendications

1. Dispositif de déploiement de marchepied (20) pour un marchepied apte à être sorti (22) d'une entrée de porte d'un véhicule de transport de passagers, ledit marchepied (22) pouvant être déplacé depuis une position de repos dans une position d'usage et vice versa,
- des moyens de guidage (34) étant prévus qui s'étendent chacun à côté du marchepied (22) dans la direction de rentrée/déploiement et
- ledit marchepied (22) étant relié par l'intermédiaire d'éléments de guidage (44) aux moyens de guidage (34) de telle sorte que ledit marchepied (22) puisse pivoter suivant un axe longitudinal (Y-Y) qui s'étend à travers lesdits moyens de guidage (44) et transversalement aux moyens de guidage (34),
**caractérisé par le fait que** le marchepied (22) est aussi apte à pivoter autour d'axes longitudinaux (X-X) qui s'étendent dans la direction longitudinale des moyens de guidage (34) et que lesdits éléments de guidage (44) comprennent chacun un corps de base (46) ayant une ouverture traversante (50) à travers laquelle s'étend respectivement un moyen de guidage (34), ainsi qu'une portion formant tenon (48) qui est contiguë audit corps de base (46) et qui se projette dans une ouverture de logement (52) du marchepied (22).

2. Dispositif de déploiement de marchepied (20) selon la revendication 1, **caractérisé par le fait que** les portions formant tenon (48) sont déplaçables, dans lesdites ouvertures de logement (52), suivant leur direction longitudinale.

3. Dispositif de déploiement de marchepied (20) selon l'une quelconque des revendications 1 et 2, **caractérisé par le fait qu'**au moins un moyen de guidage (44) est réalisé en tant qu'écrou de broche qui entraîne ledit marchepied (22).

4. Dispositif de déploiement de marchepied (20) selon l'une quelconque des revendications 1 et 2, **caractérisé par le fait que** l'on prévoit en outre un arbre de commande qui entraîne le marchepied (22).

5. Dispositif de déploiement de marchepied (20) selon l'une quelconque des revendications 1 à 4, **caractérisé par le fait que** ledit marchepied (22) est constitué par une plaque principale (36) et par un profilé de bord arrière (38) qui est contigu à celle-ci, ledit profité de bord arrière (38) présentant lesdites ouvertures de logement (52).

6. Dispositif de déploiement de marchepied (20) selon l'une quelconque des revendications 1 à 5, **caractérisé par le fait que** le bo1tler (24) comprend en outre une traverse avant d'appui (42) sur laquelle s'appuie ledit marchepied (22) à l'état rentré et aussi lors du déplacement.

7. Dispositif de déploiement de marchepied (20) selon l'une quelconque des revendications 1 à 6, **caractérisé par le fait que** des douilles (54) dans chacune d'elles peut être Introduite une portion formant tenon (48) sont disposées dans lesdites ouvertures de logement (52).
